# FASCICULE DE BREVET EUROPEEN

(11) **EP 3 215 766 B1**
(45) Date de publication et mention de la délivrance du brevet: **03.07.2019**
(21) Numéro de dépôt: 14812283.1
(22) Date de dépôt: 05.11.2014
(51) Int. Cl.: F16J 15/32, F16L 17/035, F16L 21/03

(54) **JOINT D'ETANCHEITE COMPOSITE POUR RACCORD RAPIDE DE TRANSFERT DE FLUIDE, ET CE RACCORD**
VERBUNDDICHTUNG FÜR SCHNELLE FLUIDÜBERTRAGUNGSKUPPLUNG UND EINE DERARTIGE KUPPLUNG
COMPOSITE SEAL FOR RAPID FLUID-TRANSFER COUPLING, AND COUPLING OF THIS TYPE

(43) Date de publication de la demande: 13.09.2017
(73) Titulaire: Hutchinson, 75008 Paris (FR)
(72) Inventeur: GROUILLET, Philippe, F-45700 Conflans sur Loing (FR); FAILLU, Jean-Luc, F-45700 Villemandeur (FR)
(74) Mandataire: Gevers & Orès
(86) Numéro de dépôt international: PCT/FR2014/052823
(87) Numéro de publication internationale: WO 2016/071583

(56) Documents cités:
- WO-A1-2006/037967
- DE-A1- 19 645 985
- DE-A1-102010 041 611
- DE-A1-102011 102 477
- US-A- 2 953 398
- US-A1- 2006 175 765
- US-A1- 2008 023 893

## Description

La présente invention concerne un joint d'étanchéité annulaire à armature utilisable dans un raccord rapide pour transfert de fluide, et ce raccord rapide incorporant un tel joint. L'invention s'applique notamment à des raccords rapides dans le domaine automobile, incluant des véhicules mus par un moteur de combustion interne de type tourisme, utilitaire, poids-lourd, de chantier (e.g. de génie civil), ou même agricole, et dans le domaine des installations à poste fixe (e.g. groupes électrogènes, compresseurs, pompes) utilisant un moteur à combustion analogue. Pour ces deux groupes d'applications, le dispositif selon l'invention peut en particulier équiper un circuit de dépollution, de refroidissement ou avantageusement d'alimentation d'air.

D'une manière générale dans un circuit de transfert de fluide pour véhicule automobile, il est connu, pour raccorder de manière étanche un tuyau souple à un embout mâle rigide verrouillable, d'utiliser un raccord globalement statique comprenant un corps de connecteur ou manchon polymérique et cet embout mâle qui est introduit par une extrémité du manchon, l'autre extrémité du manchon étant enserrée par le tuyau. Par « raccord globalement statique », on entend de manière connue dans la présente description un raccord statique ou sensiblement statique, i.e. dont le manchon et l'embout ne sont pas mobiles en rotation relative permanente contrairement aux raccords dynamiques à arbres tournants, étant quasiment immobiles l'un par rapport à l'autre.

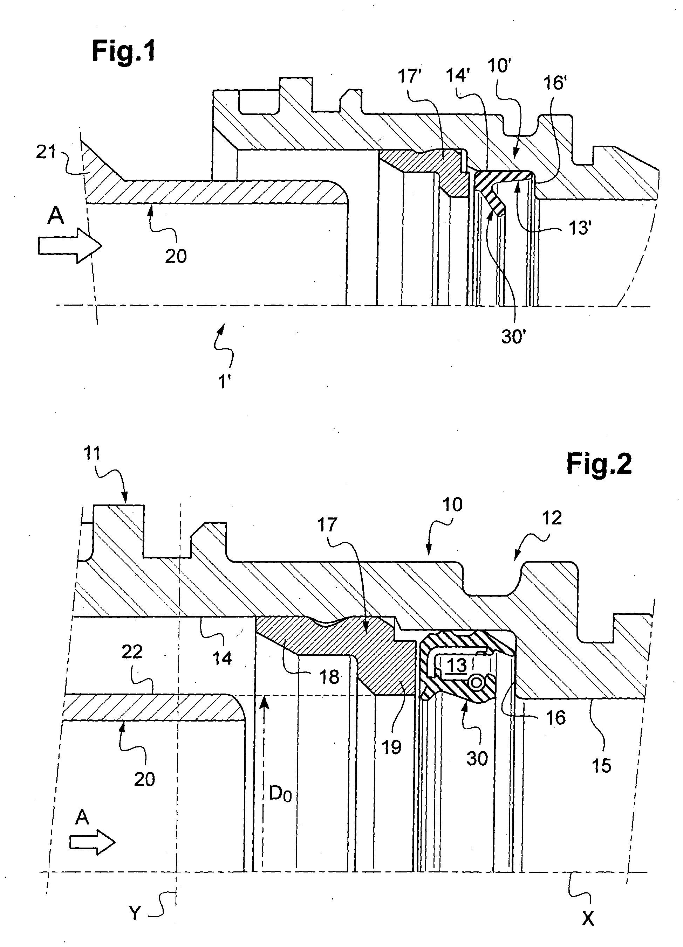

Comme illustré à la figure 1 qui montre un exemple représentatif d'un tel raccord rapide 1' connu de type globalement statique, le manchon 10' présente usuellement un logement annulaire 13' qui est formé par un épaulement radial 16' et une face interne cylindrique 14' du manchon 10' qui reçoit un joint annulaire d'étanchéité statique 30'. Ce joint statique 30', qui est généralement de type à lèvre et réalisé en un élastomère moulé par injection, est monté serré entre la face interne 14' du manchon 10', l'épaulement 16' et l'embout mâle 20 à saillie périphérique 21, une fois ce dernier introduit radialement et axialement à l'intérieur du manchon 10' et au contact du joint 30' dans le sens de la flèche A, lequel joint 30' est en outre intercalé axialement entre l'épaulement 16' et une entretoise 17' fixée à la face interne du manchon 10',

Un inconvénient majeur de ce joint élastomère 30' réside dans sa structure mono-matière, qui est le siège d'un vieillissement naturel faisant perdre au joint 30' une partie significative de ses propriétés dans le temps et se traduisant par une diminution progressive de l'effort de serrage du joint 30' contre l'embout 20 et le manchon 10', d'où l'apparition potentielle de suintements ou de fuites indésirables.

Un autre inconvénient de ce joint élastomère 30' connu est qu'il requiert sa mise en compression radiale par l'opérateur lors du montage axial de l'embout 20, ce qui se traduit par un effort de montage élevé.

Il existe également des joints d'étanchéité annulaires pour utilisation statique ou dynamique qui sont de type composites, étant constitués d'un corps de joint en caoutchouc et d'une armature rigide (e.g. métallique), comme par exemple décrit dans les documents EP-A1-0 317 903 et US-A-4,579,352 présentant chacun un tel joint de section axiale en U qui est renforcé par une armature en L et dont l'aile interne est pré-comprimée par un ressort.

En particulier, le joint décrit dans EP-A1-0 317 903 présente :
- une aile interne d'étanchéité qui est munie, sur sa face interne, d'une arête circonférentielle destinée à réaliser l'étanchéité avec un embout interne et, sur sa face externe, d'un ressort à compression radiale monté sensiblement en regard de cette arête d'étanchéité interne,
- d'une âme radiale qui incorpore l'armature, et
- d'une aile externe d'étanchéité qui est munie de bossages sur sa face externe et qui incorpore également l'armature.

Un inconvénient majeur de ce joint composite réside dans cette arête d'étanchéité qu'il présente sur son aile interne et qui, si elle est adaptée pour une application dynamique du joint (i.e. en étant plaquée sur un arbre d'un raccord tournant), ne l'est pas de manière satisfaisante pour une application statique du fait que cette arête d'étanchéité peut procurer à la longue un défaut d'étanchéité et un suintement indésirables lors du transfert du fluide.

Par ailleurs des joints d'étanchéité sont connus des documents US2006/0175765A1 et DE 196 45 985 A1.

Un but de la présente invention est de proposer un joint d'étanchéité annulaire composite à corps de joint souple (en particulier élastomère) et à armature rigide, utilisable dans un raccord rapide pour transfert de fluide qui remédie à l'ensemble des inconvénients précités, le raccord comprenant un manchon tubulaire femelle et un embout tubulaire mâle qui est monté radialement à l'intérieur du manchon pour réaliser une étanchéité globalement statique entre un logement interne du manchon et une surface externe cylindrique de l'embout, le joint comprenant:
- une aile axiale radialement interne présentant une face radialement interne qui comprend une portion circonférentielle souple (e.g. élastomère) radialement la plus interne adaptée pour être serrée contre ladite surface externe de l'embout
- une aile axiale radialement externe présentant une face radialement externe souple (e.g. élastomère) adaptée pour être plaquée contre ledit logement, et
- une âme reliant ladite aile interne à ladite aile externe.

A cet effet, un joint d'étanchéité selon l'invention est tel que ladite portion circonférentielle la plus interne est convexe de forme arrondie en section axiale.

On notera que la Demanderesse a vérifié lors de ses travaux que cette portion la plus interne convexe et arrondie améliore de manière significative l'étanchéité au fluide transféré et la résistance au suintement du joint dans un raccord globalement statique (i.e. sans rotation relative permanente entre le manchon et l'embout), en comparaison d'une portion la plus interne définie par l'arête précitée de l'art antérieur en contact avec un arbre tournant. Ainsi, un tel joint globalement statique selon l'invention est adapté pour optimiser cette étanchéité et minimiser ces suintements au sein d'un raccord par exemple encliquetable à manchon et embout immobiles l'un par rapport à l'autre ou tout au plus mobiles par des mouvements de translation par exemple alternatifs ou par des mouvements alternatifs de rotation de faible amplitude (par exemple de quelques degrés) entre manchon et embout.

On notera également que cette portion la plus interne convexe et arrondie est continue dans la direction circonférentielle.

Avantageusement, ladite portion circonférentielle la plus interne peut présenter en section axiale une forme d'arc de cercle lui conférant une forme circonférentielle de tore tronqué (i.e. de tore fermé tronqué par sa section transversale non entièrement circulaire).

Encore plus avantageusement, cette portion peut présenter un rayon compris entre 0,5 mm et 3,0 mm pour un diamètre interne de ladite aile interne à l'état serré contre l'embout compris entre 35 mm et 100 mm (i.e. pour un diamètre externe de l'embout compris entre 35 mm et 100 mm).

Selon une autre caractéristique de l'invention, ladite aile interne peut être pourvue d'un moyen de rappel qui la précontraint radialement vers l'intérieur.

Avantageusement, ce moyen de rappel peut comprendre un ressort métallique annulaire à compression radiale qui est monté sur une face radialement externe de ladite aile interne en étant centré de manière axialement décalée par rapport à ladite portion circonférentielle la plus interne.

On notera qu'un joint composite selon l'invention remédie à l'inconvénient susmentionné des joints statiques mono-matière en ne rendant plus dépendant du vieillissement de l'élastomère l'effort de serrage radial de l'aile interne du joint sur l'embout, puisque c'est ce moyen de rappel qui l'assure et que les conditions normales de fonctionnement d'un circuit de fluide pour véhicule automobile ne sont pas de nature à altérer ce moyen de rappel de type ressort métallique (qu'il soit en acier simple ou inoxydable).

Selon l'invention, ladite aile externe comprend une extrémité libre formée d'une lèvre d'étanchéité souple circonférentielle (e.g. élastomère) qui est adaptée pour être plaquée par ledit fluide sous pression contre ledit logement, et qui s'étend axialement en s'éloignant de ladite âme et radialement vers l'intérieur (i.e. de manière oblique).

Avantageusement, ladite lèvre d'étanchéité peut présenter une longueur projetée dans la direction axiale comprise entre 0,8 mm et 3,0 mm pour un diamètre interne de ladite aile interne à l'état serré contre l'embout compris entre 35 mm et 100 mm (i.e, pour un diamètre externe de l'embout compris entre 35 mm et 100 mm).

On notera que cette lèvre d'étanchéité peut s'étendre obliquement de manière continue ou discontinue dans la direction circonférentielle, et a pour effet d'améliorer dans la durée l'étanchéité avec le logement du manchon, grâce à la pression du fluide qui maintient cette lèvre plaquée contre ce logement.

On notera également que l'étanchéité de l'aile externe du joint dans le logement du manchon est assurée par la compression à l'assemblage, et est préservée dans le temps par l'armature et par ladite lèvre d'étanchéité.

On notera en outre que lors de l'insertion axiale de l'embout à l'intérieur du manchon, l'opérateur ne perçoit que le serrage de l'aile interne du joint munie du moyen de rappel et donc un effort de montage plus réduit qu'avec un joint mono-matière élastomère.

Selon l'invention, ladite face externe de ladite aile externe comprend au moins un bossage ou bourrelet souple circonférentiel (e.g. élastomère) qui est adapté pour être plaqué contre ledit logement et qui présente en section axiale une forme d'arc de cercle lui conférant une forme circonférentielle de tore tronqué, et de préférence plusieurs dits bossages séparés par un tronçon axial.

On notera que ledit ou chaque bossage élastomère peut être continu ou discontinu dans la direction circonférentielle, et confère au joint une seconde étanchéité radialement extérieure venant s'ajouter à la première étanchéité extérieure procurée par ladite lèvre via la pression du fluide la plaquant contre la paroi dudit logement.

D'une manière générale, le joint peut présenter au repos une section axiale sensiblement en U, ladite âme s'étendant radialement et étant renforcée par ladite armature qui se prolonge dans ladite aile externe en formant un « L » en section axiale, ladite armature étant métallique ou en matière plastique rigide (par exemple en un matériau thermoplastique tel qu'un élastomère thermoplastique) et renforçant de manière annulaire et continue le corps élastomère du joint. Ce corps de joint élastomère peut être par exemple réalisé en un caoutchouc ou bien en un élastomère thermoplastique et comprend alors notamment ladite portion la plus interne convexe et arrondie et ladite face externe de l'aile externe.

Selon une autre caractéristique de l'invention, ladite portion circonférentielle la plus interne peut se prolonger axialement vers ladite âme par une rampe oblique s'étendant radialement vers l'intérieur jusqu'à une portion de liaison formant charnière qui peut relier ladite aile interne à ladite âme et être pourvue d'une lèvre circonférentielle de protection s'étendant radialement vers l'intérieur à l'extrémité de ladite rampe.

Avantageusement, ladite charnière peut présenter une épaisseur comprise entre 0,5 mm et 1,0 mm pour un diamètre interne de l'aile interne à l'état serré contre l'embout compris entre 35 mm et 100 mm (i.e. pour un diamètre externe de l'embout compris entre 35 mm et 100 mm).

On notera que ladite charnière peut optionnellement présenter une hauteur réduite, en comparaison des charnières des joints en U connus, ce qui permet d'absorber des défauts de centrage plus marqués entre le logement et l'embout

Un raccord rapide pour transfert de fluide selon l'invention est utilisable pour raccorder un embout tubulaire mâle rigide à un tuyau femelle souple, le raccord comprenant :
- un manchon tubulaire femelle, de préférence moulé par injection d'une matière plastique ou d'un composite à matrice plastique,
- l'embout qui est monté radialement et axialement à l'intérieur du manchon et qui présente une surface externe cylindrique, et
- un joint d'étanchéité annulaire à armature qui est logé dans un logement interne du manchon et qui est adapté pour être serré contre ladite surface externe de l'embout de sorte à réaliser une étanchéité globalement statique entre le manchon et l'embout,
et ce joint est tel que défini ci-dessus.

Comme expliqué précédemment, le manchon et l'embout d'un tel raccord selon l'invention ne sont pas mobiles en rotation relative permanente lors du transfert de fluide, étant uniquement susceptibles d'être mobiles en translation relative en fonctionnement lors dudit transfert ou suivant des mouvements de rotation alternatifs de quelques degrés.

Selon une autre caractéristique de l'invention, ledit logement du manchon peut être défini par :
- une première face cylindrique interne du manchon présentant un premier diamètre,
- une seconde face cylindrique interne du manchon présentant un second diamètre inférieur audit premier diamètre,
- un épaulement annulaire qui relie radialement ladite première face à ladite seconde face, et par
- une butée annulaire pour le joint qui s'étend radialement à partir de ladite première face et contre laquelle le joint est axialement juxtaposé,
le joint étant monté en appui contre ladite première face du manchon en étant calé entre ledit épaulement et ladite butée et en présentant une hauteur radiale de joint sensiblement égale à celle dudit épaulement.

Avantageusement, la butée peut comprendre une entretoise comportant une portion axiale de fixation montée sous ladite première face et une portion radiale de butée qui prolonge ladite portion axiale vers ledit épaulement et qui présente une hauteur radiale de butée sensiblement égale à ladite hauteur radiale de joint.

D'autres caractéristiques, avantages et détails de la présente invention ressortiront à la lecture de la description suivante d'un exemple de réalisation de l'invention, donné à titre illustratif et non limitatif, la description étant réalisée en référence aux dessins joints, parmi lesquels :
la figure 1 est une vue schématique partielle en demi-section axiale d'un raccord rapide selon l'art antérieur comprenant un joint d'étanchéité élastomère connu,
la figure 2 est une vue schématique partielle en demi-section axiale d'un raccord rapide selon un exemple de l'invention comprenant un joint d'étanchéité composite élastomère à armature,
la figure 3 est une vue agrandie en demi-section axiale du joint composite visible à la figure 2,
la figure 4 est une vue de détail de l'extrémité libre de l'aile externe du joint des figures 2 et 3, et
la figure 5 est une vue de détail de l'aile interne du joint des figures 2 et 3.

Dans la présente description, les expressions « devant » ou « avant » désignent des positionnements relatifs selon l'axe de symétrie X de l'embout mâle et du manchon qui sont tournés du côté de la direction d'insertion de l'embout mâle, et « derrière » ou « arrière » désignent des positionnements relatifs selon l'axe X tournés du côté opposé à cette direction (i.e. du côté du tuyau).

Le raccord rapide 1 selon l'invention illustré à la figure 2 comprend essentiellement un manchon tubulaire 10 à base d'une matière plastique ou composite à matrice plastique enserrant un tuyau souple (non représenté) et verrouillant axialement un embout mâle rigide 20 par un organe de verrouillage (non visible, par exemple de type épingle) monté à travers le manchon 10 et qui coopère avec une saillie périphérique 21 de l'embout 20 (l'organe de verrouillage peut comporter de manière connue au moins deux ailes de verrouillage élastiques réunies par une tête de préhension et enfoncées transversalement de manière réversible à travers deux lumières formées à l'avant du manchon 10 pour se bloquer par encliquetage en une position verrouillée contre la saillie 21 suite à l'insertion complète de l'embout 20).

Plus précisément, le manchon 10, avantageusement moulé par injection d'un ou de plusieurs polymères thermoplastiques tels que du PBT (polybutylène téréphtalate) ou un polyamide (e.g. PA 6, PA 6.6, PA 4.6), présente dans cet exemple une portion avant 1 1 qui est traversée par l'organe de verrouillage et une portion arrière 12 qui comprend un logement annulaire interne 13 recevant un joint d'étanchéité 30 selon l'invention.

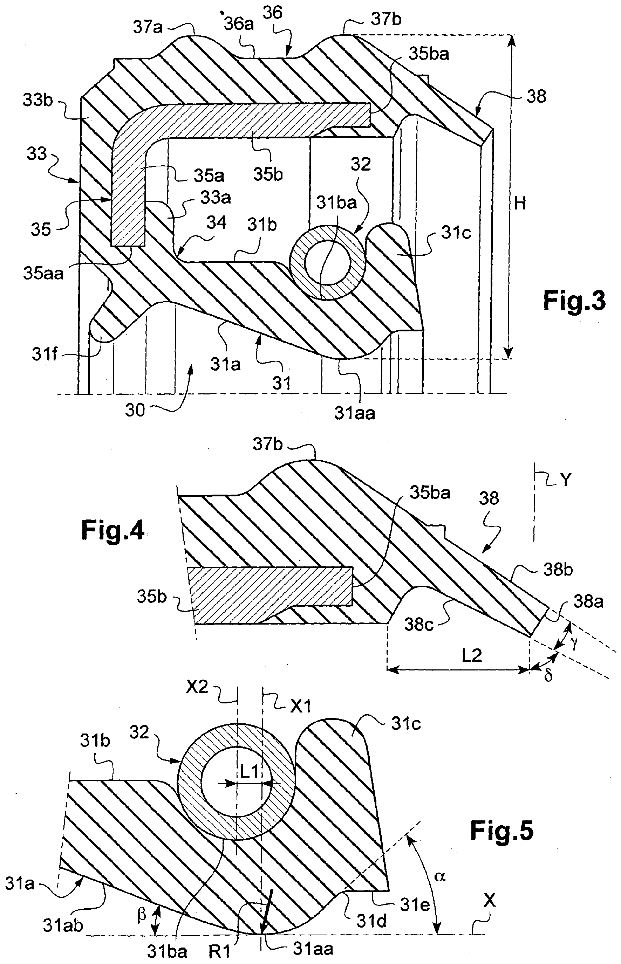

La portion arrière 12 du manchon 10 présente essentiellement dans cet exemple une première face cylindrique interne 14 de diamètre D1 contre laquelle est monté le joint 30 et une seconde face cylindrique interne 15 qui présente un diamètre D2 inférieur à D1 et qui est reliée à la première face 14 par un épaulement radial annulaire 16. L'épaulement 16 définit le logement 13 en liaison avec une entretoise annulaire 17 qui forme une butée axiale pour le joint 30 et qui est fixée à la première face 14. Comme visible à la figure 2, l'entretoise 17 présente une portion axiale 18 qui est fixée à la première face 14 via une rainure annulaire radiale de la portion axiale 18 coopérant avec une nervure annulaire 14a de la première face 14 et qui se prolonge à angle droit par une portion radiale 19 calant axialement le joint 30 contre l'épaulement 16. On voit à la figure 3 que le joint 30 présente une hauteur radiale de joint H sensiblement égale à la hauteur radiale de l'entretoise 17 et à la hauteur radiale de l'épaulement 16.

Comme illustré à la figure 3, le joint 30 composite selon l'invention présente en demi-section axiale une géométrie en U, comprenant :
- une aile annulaire axiale radialement interne 31 de préférence réalisée en un matériau élastomère dont une face radialement interne 31a élastomère est adaptée pour être serrée contre une surface cylindrique radialement externe 22 de l'embout 20 par un moyen de rappel 32 qui précontraint l'aile 31 radialement vers l'intérieur (ce moyen 32 est par exemple constitué d'un ressort métallique annulaire à compression radiale qui est monté dans un creux 31 ba d'une face radialement externe 31b de l'aile interne 31),
- une âme annulaire radiale 33 qui s'étend à angle droit à partir d'une portion de liaison formant charnière 34 de l'aile interne 31 en étant de préférence à base du même matériau élastomère et qui est renforcée par une portion annulaire radiale 35a d'une armature annulaire 35 en plastique rigide ou en métal en forme de « L » en demi-section axiale, et
- une aile annulaire axiale radialement externe 36 de préférence à base de ce même matériau élastomère dont une face radialement externe 36a élastomère est adaptée pour être serrée contre la première face 14 du manchon 10 et qui est également renforcée par une portion annulaire axiale 35b de l'armature 35 prolongeant à angle droit la portion radiale 35a, l'âme 33 et l'aile 36 formant ainsi un composite élastomère/ plastique rigide ou métal.

Comme visible à la figure 5, la face interne 31a de l'aile interne 31 présente, à proximité de son extrémité libre 31c recourbée radialement vers l'extérieur qui cale le moyen de rappel 32 dans le creux 31ba, une portion circonférentielle élastomère radialement la plus interne 31 aa qui, selon l'invention, est convexe de forme arrondie en section axiale. Dans cet exemple, la portion 31aa présente en section axiale une forme d'arc de cercle lui conférant une forme globale de tore tronqué de rayon R1 par exemple égal à 1,0 mm pour un diamètre externe D0 de la surface externe 22 de l'embout 20 de l'ordre de 45 mm (ce tore partiel étant tronqué en section axiale, du fait que la portion arrondie 31aa se limite à la face interne 31a de l'aile interne 31 et donc ne se referme pas sur elle-même à la manière d'un cercle).

Comme expliqué ci-dessus, la portion arrondie 31aa selon l'invention améliore nettement au contact de l'embout 20 l'étanchéité au fluide transféré (e.g. de l'air) et la résistance au suintement du joint 30 dans le raccord 1 globalement statique, en comparaison d'une portion la plus interne définie par une arête circonférentielle comme dans EP-A1-0 317 903.

Comme illustré à la figure 5. la portion arrondie 31aa se prolonge :
- en direction de l'extrémité radiale recourbée 31c, par un point d'inflexion générant une zone concave 31d qui forme à sa naissance un angle α par exemple de 45° ± 7° avec la direction axiale X et qui se termine par une courte portion axiale 31e formant une base pour l'extrémité 31c, et
- en direction de la charnière 34, par une rampe oblique 31ab qui s'étend radialement vers l'intérieur en formant un angle β avec la direction axiale X par exemple de 20° ± 10° et qui se termine par une lèvre circonférentielle de protection 31f (voir figure 3) s'étendant obliquement radialement vers l'intérieur à l'extrémité de la rampe 31ab et dans le prolongement de l'âme 33.

La charnière 34 présente une épaisseur par exemple de l'ordre de 0,75 mm pour un diamètre externe D0 de l'embout 20 de l'ordre de 45 mm, étant précisé que dans l'exemple illustré, l'aile interne 31a va en s'amincissant via sa rampe oblique 31ab et sa face externe 31b axiale, à partir de la portion arrondie 31aa jusqu'à atteindre une épaisseur minimale en la charnière 34.

De plus et comme notamment visible à la figure 5, le moyen de rappel 32 circonférentiel est centré de manière axialement décalée d'une distance L1 vers l'âme 33 par rapport à la portion arrondie 31aa (i.e. l'axe radial de symétrie X1 de la portion 31aa n'est pas confondu avec l'axe de symétrie X2 du moyen de rappel 32, lequel axe X2 est plus proche de l'âme 33 que l'axe X1).

L'âme 33 comprend une portion radialement intérieure 33a adjacente à la charnière 34 d'épaisseur axiale maximale qui se prolonge, via un épaulement axial rétrécissant la portion intérieure 33a, par une portion radialement extérieure 33b adjacente à l'aile externe 36, L'armature 35, de préférence métallique (par exemple constituée d'un acier de type DC01, étant précisé que d'autres métaux alliés ou non sont utilisables), s'étend radialement et de manière continue sur ces deux portions 33a et 33b.

Comme visible à la figure 3, l'aile externe 36 comprend sur sa face externe 36a un premier et un second bossages élastomères circonférentiels 37a et 37b axialement espacés qui sont adaptés pour être plaqués contre la première face interne 14 du manchon 10 au sein du logement 13 et qui présentent chacun en section axiale une forme d'arc de cercle leur conférant une forme circonférentielle de tore tronqué. Le second bossage 37b qui est axialement le plus proche de l'extrémité libre 38 de l'aile externe 36 se prolonge par une lèvre d'étanchéité d'extrémité 38 circonférentielle élastomère qui est adaptée pour être plaquée par le fluide sous pression contre la face interne 14 et l'épaulement 16 au sein du logement 13 et qui s'étend axialement en s'éloignant de l'âme 33 et radialement vers l'intérieur de manière oblique.

Comme illustré à la figure 4, la lèvre 38 présente :
- une forme légèrement profilée jusqu'à une tranche d'extrémité 38a de la lèvre 38 (i.e. une épaisseur continûment décroissante jusqu'à la tranche d'extrémité 38a), de telle sorte que l'angle γ formé entre le bord radialement externe 38b (qui prolonge le second bossage 37b) et le bord radialement interne 38c de la lèvre 38 est d'environ 12° et que la tranche d'extrémité 38a présente une épaisseur d'environ 0,3 mm ; et
- une longueur L2 projetée dans la direction axiale X de 1,6 mm pour un diamètre externe D0 de l'embout 20 d'environ 45 mm, étant précisé que la lèvre 38 forme au repos un angle δ avec la direction radiale Y d'environ 65°.

Comme expliqué ci-dessus, la lèvre 38 améliore l'étanchéité de l'aile externe 36 du joint 30 contre le manchon 10 via la pression du fluide la plaquant au sein du logement 13 contre la première face 14 du manchon 10 et l'épaulement 16, ce qui améliore dans la durée l'étanchéité avec le logement 13 grâce à la pression du fluide. L'étanchéité entre l'aile externe 36 et le logement 13 est ainsi assurée par la compression du joint 30 à l'assemblage et est préservée dans le temps par l'armature 35 et par la lèvre d'étanchéité 38.

Quant aux bossages 37a et 37b, ils confèrent au joint une seconde étanchéité avec le logement 13 s'ajoutant à la première étanchéité procurée par la lèvre 38, étant précisé que l'on pallie grâce à la lèvre 38 un éventuel défaut d'étanchéité dans la durée des bossages 37a et 37b, en raison de leur déformation rémanente due au vieillissement de l'élastomère qui les constitue.

Dans l'exemple de la figure 3, l'armature annulaire 35 s'étend radialement le long des portions intérieure 33a et extérieure 33b de l'âme 33 et axialement le long de l'aile externe 36, étant précisé que l'armature 35 :
- est noyée dans la portion intérieure 33a de l'âme 33, i.e. la tranche annulaire radialement interne 35aa de l'armature 35 est axialement entourée du matériau élastomère du joint 30 à la fois du côté interne de l'âme 33 (tourné vers les ailes 31 et 36) et du côté externe de l'âme 33 (tourné à l'opposé des ailes 31 et 36), et
- définit de manière continue la face interne de l'âme 33 en sa portion extérieure 33b et en la face interne 36b de l'aile externe 36 sur la majeure partie de cette dernière (i.e. l'armature 35 n'y est pas noyée mais seulement recouverte sur sa face externe du matériau élastomère du joint 30). étant précisé que la tranche annulaire radialement externe 35ba de l'armature 35 (visible à la figure 4) est noyée dans ce matériau élastomère en étant entourée par ce dernier également sur une zone réduite de sa face interne.

## Revendications

1. Joint d'étanchéité annulaire (30) composite comprenant un corps de joint souple de préférence élastomère et une armature rigide (35), le joint étant utilisable dans un raccord rapide (1) pour transfert de fluide comprenant un manchon tubulaire femelle (10) et un embout tubulaire mâle (20) qui est monté radialement à l'intérieur du manchon pour réaliser une étanchéité globalement statique entre un logement interne (13) du manchon et une surface externe cylindrique (22) de l'embout, le joint comprenant:
- une aile axiale radialement interne (31) présentant une face radialement interne (31a) qui comprend une portion circonférentielle souple radialement la plus interne (31aa) adaptée pour être serrée contre ladite surface externe de l'embout, ladite portion circonférentielle la plus interne (31aa) étant convexe de forme arrondie en section axiale
- une aile axiale radialement externe (36) présentant une face radialement externe (36a) souple adaptée pour être plaquée contre ledit logement, et
- une âme (33) reliant ladite aile interne à ladite aile externe,
**caractérisé en ce que**
- ladite face externe (36a) de ladite aile externe (36) comprend au moins un bossage souple circonférentiel (37a, 37b) qui est adapté pour être plaqué contre ledit logement (13) et qui présente en section axiale une forme d'arc de cercle lui conférant une forme circonférentielle de tore tronqué, et
- ladite aile externe (36) comprend une extrémité libre formée d'une lèvre d'étanchéité (38) souple circonférentielle qui est adaptée pour être plaquée par ledit fluide sous pression contre ledit logement (13), et qui s'étend axialement en s'éloignant de ladite âme (33) et radialement vers l'intérieur.

2. Joint d'étanchéité (30) selon la revendication 1, **caractérisé en ce que** ladite portion circonférentielle la plus interne (31aa) présente en section axiale une forme d'arc de cercle lui conférant une forme circonférentielle de tore tronqué.

3. Joint d'étanchéité (30) selon la revendication 2, **caractérisé en ce que** ladite portion circonférentielle la plus interne (31aa) présente un rayon (R1) compris entre 0,5 mm et 3,0 mm pour un diamètre interne (D0) de ladite aile interne (31) à l'état serré contre l'embout (20) compris entre 35 mm et 100 mm.

4. Joint d'étanchéité (30) selon une des revendications précédentes, **caractérisé en ce que** ladite aile interne (31) est pourvue d'un moyen de rappel (32) qui la précontraint radialement vers l'intérieur.

5. Joint d'étanchéité (30) selon la revendication 4, **caractérisé en ce que** ledit moyen de rappel (32) comprend un ressort métallique annulaire de compression radiale qui est monté sur une face radialement externe (31b) de ladite aile interne (31) en étant centré de manière axialement décalée d'une distance (L1) par rapport à ladite portion circonférentielle la plus interne (31aa).

6. Joint d'étanchéité (30) selon l'une des revendications précédentes, **caractérisé en ce que** ladite lèvre d'étanchéité (38) présente une longueur projetée (L2) dans la direction axiale (X) comprise entre 0,8 mm et 3,0 mm pour un diamètre interne (D0) de ladite aile interne (31) à l'état serré contre l'embout (20) compris entre 35 mm et 100 mm.

7. Joint d'étanchéité (30) selon une des revendications précédentes, **caractérisé en ce que** ladite face externe (36a) de ladite aile externe (36) comprend plusieurs dits bossages séparés par un tronçon axial.

8. Joint d'étanchéité (30) selon la revendication 7, caractérisé en ce ladite face externe (36a) de ladite aile externe (36) comprend un premier et un second bossages (37a, 37b) axialement espacés, le second bossage (37b) qui est axialement le plus proche de l'extrémité libre (38) de l'aile externe (36) se prolongeant par la lèvre d'étanchéité d'extrémité (38).

9. Joint d'étanchéité (30) selon une des revendications précédentes, **caractérisé en ce que** le joint présente au repos une section axiale sensiblement en U, ladite âme (33) s'étendant radialement et étant renforcée par ladite armature (35) qui se prolonge dans ladite aile externe (36) en formant un « L » en section axiale, ladite armature étant métallique ou en matière plastique rigide et renforçant de manière annulaire et continue un corps élastomère du joint, lequel corps élastomère comprend ladite portion circonférentielle la plus interne et ladite face externe de ladite aile externe.

10. Joint d'étanchéité (30) selon une des revendications précédentes, **caractérisé en ce que** ladite portion circonférentielle la plus interne (31aa) se prolonge axialement vers ladite âme (33) par une rampe oblique (31ab) s'étendant radialement vers l'intérieur jusqu'à une portion de liaison formant charnière (34) qui relie ladite aile interne (31) à ladite âme et qui est pourvue d'une lèvre circonférentielle de protection (31f) s'étendant radialement vers l'intérieur à l'extrémité de ladite rampe.

11. Joint d'étanchéité (30) selon la revendication 10, **caractérisé en ce que** ladite charnière (34) présente une épaisseur comprise entre 0,5 mm et 1,0 mm pour un diamètre interne (D0) de ladite aile interne (31) à l'état serré contre l'embout (20) compris entre 35 mm et 100 mm.

12. Raccord rapide (1) pour transfert de fluide utilisable pour raccorder un embout tubulaire mâle rigide (20) à un tuyau femelle souple, le raccord comprenant :
- un manchon tubulaire femelle (10), de préférence moulé par injection d'une matière plastique ou d'un composite à matrice plastique,
- l'embout qui est monté radialement et axialement à l'intérieur du manchon et qui présente une surface externe cylindrique (22), et
- un joint d'étanchéité annulaire (30) à armature (35) qui est logé dans un logement interne (13) du manchon et qui est adapté pour être serré contre ladite surface externe de l'embout de sorte à réaliser une étanchéité globalement statique entre le manchon et l'embout,
**caractérisé en ce que** le joint est tel que défini à l'une des revendications précédentes.

13. Raccord (1) selon la revendication 12, **caractérisé en ce que** le manchon (10) et l'embout (20) ne sont pas mobiles en rotation relative permanente lors du transfert de fluide, étant uniquement susceptibles d'être mobiles en translation relative et/ou en rotation alternative en fonctionnement lors dudit transfert.

14. Raccord (1) selon la revendication 12 ou 13, **caractérisé en ce que** ledit logement (13) est défini par :
- une première face cylindrique interne (14) du manchon (10) présentant un premier diamètre,
- une seconde face cylindrique interne (15) du manchon présentant un second diamètre inférieur audit premier diamètre,
- un épaulement annulaire (16) qui relie radialement ladite première face à ladite seconde face, et par
- une butée annulaire (17) pour le joint (30) qui s'étend radialement à partir de ladite première face et contre laquelle le joint est axialement juxtaposé,
le joint étant monté en appui contre ladite première face du manchon en étant calé entre ledit épaulement et ladite butée et en présentant une hauteur radiale de joint (H) sensiblement égale à celle dudit épaulement.

15. Raccord (1) selon la revendication 14, **caractérisé en ce que** ladite butée (17) comprend une entretoise comportant une portion axiale de fixation (18) montée sous ladite première face (14) et une portion radiale de butée (19) qui prolonge ladite portion axiale vers ledit épaulement (16) et qui présente une hauteur radiale de butée sensiblement égale à ladite hauteur radiale de joint (H).

## Patentansprüche

1. Ringförmige Verbunddichtung (30), umfassend einen nachgiebigen Dichtungskörper, vorzugsweise elastomerisch, und einen steifen Rahmen (35), wobei die Dichtung in einer Schnellkupplung (1) für Fluidübertragung verwendbar ist, umfassend eine weibliche rohrförmige Muffe (10) und ein männliches rohrförmiges Anschlussstück (20), das radial im Inneren der Muffe montiert ist, um eine global statische Abdichtung zwischen einem Innengehäuse (13) der Muffe und einer zylindrischen Außenfläche (22) des Anschlussstücks zu realisieren, wobei die Dichtung umfasst:
- einen radial inneren axialen Flügel (31), der eine radial innere Seite (31a) aufweist, die einen radial innersten nachgiebigen Umfangsabschnitt (31aa) umfasst, der angepasst ist, um gegen die Außenfläche des Anschlussstücks gedrückt zu werden, wobei der innerste Umfangsabschnitt (31aa) konvex mit einer in axialem Querschnitt abgerundeten Form ist
- einen radial äußeren axialen Flügel (36), der eine nachgiebige radial äußere Seite (36a) aufweist, die angepasst ist, um gegen das Gehäuse gepresst zu werden, und
- einen Steg (33), der den inneren Flügel mit dem äußeren Flügel verbindet,
**dadurch gekennzeichnet, dass**
- die äußere Seite (36a) des äußeren Flügels (36) mindestens eine umlaufende nachgiebige Nabe (37a, 37b) umfasst, die angepasst ist, um gegen das Gehäuse (13) gepresst zu werden und die in axialem Querschnitt eine Kreisbogenform aufweist, die ihr eine kugelstumpfförmige Umfangsform verleiht, und
- der äußere Flügel (36) ein freies Ende umfasst, das aus einer umlaufenden nachgiebigen Dichtungslippe (38) gebildet ist, die angepasst ist, um durch das Fluid unter Druck gegen das Gehäuse (13) gepresst zu werden und die sich axial sich vom Steg (33) entfernend und radial nach innen erstreckt.

2. Dichtung (30) nach Anspruch 1, **dadurch gekennzeichnet, dass** der innerste Umfangsabschnitt (31aa) in axialem Querschnitt eine Kreisbogenform aufweist, die ihm eine kugelstumpfförmige Umfangsform verleiht.

3. Dichtung (30) nach Anspruch 2, **dadurch gekennzeichnet, dass** der innerste Umfangsabschnitt (31aa) einen Radius (R1) zwischen 0,5 mm und 3,0 mm bei einem Innendurchmesser (D0) des inneren Flügels (31) zwischen 35 mm und 100 mm im gegen das Anschlussstück (20) gedrückten Zustand aufweist.

4. Dichtung (30) nach einem der vorstehenden Ansprüche, **dadurch gekennzeichnet, dass** der innere Flügel (31) mit einem Rückstellmittel (32) versehen ist, das ihn radial nach innen vorspannt.

5. Dichtung (30) nach Anspruch 4, **dadurch gekennzeichnet, dass** das Rückstellmittel (32) eine radiale ringförmige metallische Druckfeder umfasst, die auf einer radial äußeren Seite (31b) des inneren Flügels (31) montiert ist, wobei sie in Bezug auf den innersten Umfangsabschnitt (31aa) auf eine um einen Abstand (L1) axial versetzte Weise zentriert ist.

6. Dichtung (30) nach einem der vorstehenden Ansprüche, **dadurch gekennzeichnet, dass** die Dichtungslippe (38) eine in die axiale Richtung (X) vorstehende Länge (L2) zwischen 0,8 mm und 3,0 mm bei einem Innendurchmesser (D0) des inneren Flügels (31) zwischen 35 mm und 100 mm im gegen das Anschlussstück (20) gedrückten Zustand aufweist.

7. Dichtung (30) nach einem der vorstehenden Ansprüche, **dadurch gekennzeichnet, dass** die äußere Seite (36a) des äußeren Flügels (36) mehrere Naben umfasst, die durch einen axialen Teilabschnitt getrennt sind.

8. Dichtung (30) nach Anspruch 7, **dadurch gekennzeichnet, dass** die äußere Seite (36a) des äußeren Flügels (36) eine erste und eine zweite Nabe (37a, 37b) aufweist, die axial beabstandet sind, wobei die zweite Nabe (37b), die dem freien Ende (38) des äußeren Flügels (36) axial am nächsten liegt, sich durch die Dichtungslippe am Ende (38) verlängert.

9. Dichtung (30) nach einem der vorstehenden Ansprüche, **dadurch gekennzeichnet, dass** die Dichtung in Ruhestellung einen im Wesentlichen U-förmigen axialen Querschnitt aufweist, wobei der Steg (33) sich radial erstreckt und durch den Rahmen (35) verstärkt wird, der sich im äußeren Flügel (36) verlängert, indem er in axialem Querschnitt ein "L" bildet, wobei der Rahmen metallisch oder aus steifem Kunststoffmaterial ist und auf ringförmige und kontinuierliche Weise einen elastomerischen Körper der Dichtung verstärkt, wobei der elastomerische Körper den innersten Umfangsabschnitt und die äußere Seite des äußeren Flügels umfasst.

10. Dichtung (30) nach einem der vorstehenden Ansprüche, **dadurch gekennzeichnet, dass** sich der innerste Umfangsabschnitt (31aa) axial über eine schräge Rampe (31ab) zum Steg verlängert, die sich radial nach innen bis zu einem Verbindungabschnitt erstreckt, der ein Gelenk (34) bildet, das den inneren Flügel (31) mit dem Steg verbindet und mit einer Schutzumfangslippe (31f) vorgesehen ist, die sich am Ende der Rampe radial nach innen erstreckt.

11. Dichtung (30) nach Anspruch 10, **dadurch gekennzeichnet, dass** das Gelenk (34) eine Dicke zwischen 0,5 mm und 1,0 mm bei einem Innendurchmesser (D0) des inneren Flügels (31) zwischen 35 mm und 100 mm im gegen das Anschlussstück (20) gedrückten Zustand aufweist.

12. Schnellkupplung (1) für Fluidübertragung, die zum Kuppeln eines männlichen rohrförmigen Anschlussstücks (20) mit einem weiblichen nachgiebigen Rohr verwendbar ist, wobei die Kupplung umfasst:
- eine weibliche rohrförmige Muffe (10), vorzugsweise gegossen durch Injektion eines Kunststoffmaterials oder eines Kunststoffmatrixverbunds,
- das Anschlussstück, das radial und axial im Inneren der Muffe montiert ist und das eine zylindrische Außenfläche (22) aufweist, und
- eine ringförmige Dichtung (30) mit Rahmen (35), die in einem Innengehäuse (13) der Muffe aufgenommen ist und die angepasst ist, um gegen die Außenfläche des Anschlussstücks gedrückt zu werden, sodass eine global statische Abdichtung zwischen der Muffe und dem Anschlussstück realisiert wird,
**dadurch gekennzeichnet, dass** die Dichtung nach einem der vorstehenden Ansprüche definiert ist.

13. Kupplung (1) nach Anspruch 12, **dadurch gekennzeichnet, dass** die Muffe (10) und das Anschlussstück (20) bei der Fluidübertragung nicht beständig relativ drehbeweglich sind, wobei sie nur imstande sind, bei Betrieb der Übertragung relativ verschiebungsbeweglich und/oder alternativ drehbeweglich zu sein.

14. Kupplung (1) nach Anspruch 12 oder 13, **dadurch gekennzeichnet, dass** das Gehäuse (13) definiert ist durch:
- eine erste zylindrische Innenseite (14) der Muffe (10), die einen ersten Durchmesser aufweist,
- eine zweite zylindrische Innenseite (15) der Muffe, die einen zweiten Durchmesser aufweist, der kleiner ist als der erste Durchmesser,
- eine ringförmige Schulter (16), die die erste Seite radial mit der zweiten Seite verbindet, und durch
- einen ringförmigen Anschlag (17) für die Dichtung (30), der sich radial aus der ersten Seite heraus erstreckt und gegen den die Dichtung axial nebeneinandergestellt ist,
wobei die Dichtung an der ersten Seite der Muffe anliegend montiert ist, wobei sie zwischen der Schulter und dem Anschlag eingeklemmt ist und eine radial Dichtungshöhe (H) aufweist, die im Wesentlichen gleich jener der Schulter ist.

15. Kupplung (1) nach Anspruch 14, **dadurch gekennzeichnet, dass** der Anschlag (17) ein Distanzstück umfasst, das einen axialen Fixierungsabschnitt (18), der unter der ersten Seite (14) montiert ist, und einen radialen Anschlagabschnitt (19) beinhaltet, der den axialen Abschnitt zur Schulter (16) verlängert und der eine radiale Anschlaghöhe aufweist, die im Wesentlichen gleich der radialen Dichtungshöhe (H) ist.

## Claims

1. A composite annular seal (30) having a flexible body, preferably elastomeric, and a rigid reinforcement (35), the seal being usable in a rapid fluid-transfer coupling (1) comprising a female tubular sleeve (10) and a male tubular endpiece (20) that is mounted radially inside the sleeve in order to produce globally static sealing between an inner recess (13) of the sleeve and a cylindrical outer surface (22) of the endpiece, the seal comprising:
- a radially inner axial wing (31) having a radially inner face (31a) which has a radially innermost flexible peripheral portion (31aa) designed to be applied tightly against said outer surface of the endpiece, said innermost peripheral portion (31aa) is convex, with a rounded shape in axial section
- a radially outer axial wing (36) having a flexible radially outer face (36a) designed to be pressed firmly against said recess, and
- a core (33) connecting said inner wing to said outer wing,
**characterized in that**
- said outer face (36a) of said outer wing (36) comprises at least one circumferential flexible boss (37a, 37b) that is suitable for being pressed against said recess (13) and that has, in axial section, an arc of circle shape giving it a truncated torus circumferential shape, and
- said outer wing (36) comprises a free end formed by a circumferential flexible sealing lip (38) that is suitable for being pressed by said pressurized fluid against said recess (13), and which extends axially while moving away from said core (33) and radially inward.

2. The seal (30) according to claim 1, **characterized in that** said innermost circumferential portion (31aa) has an arc of circle shape in axial section giving it a truncated torus circumferential shape.

3. The seal (30) according to claim 2, **characterized in that** said innermost circumferential portion (31aa) has a radius (R1) comprised between 0.5 mm and 3.0 mm for an inner diameter (D0) of said inner wing (31) in the state applied against the endpiece (20) comprised between 35 mm and 100 mm.

4. The seal (30) according to one of the preceding claims, **characterized in that** said inner wing (31) is provided with a return means (32) that pre-stresses it radially inward.

5. The seal (30) according to claim 4, **characterized in that** said return means (32) comprises an annular metal radial compression spring that is mounted on a radially outer face (31b) of said inner wing (31) while being centered axially offset by a distance (L1) relative to said innermost circumferential portion (31aa).

6. The seal (30) according to one of the preceding claims,, **characterized in that** said sealing lip (38) has a length (L2) projected in the axial direction (X) comprised between 0.8 mm and 3.0 mm for an inner diameter (D0) of said inner wing (31) in the state gripped against the endpiece (20) comprised between 35 mm and 100 mm.

7. The seal (30) according to one of the preceding claims, **characterized in that** said outer face (36a) of said outer wing (36) comprises several said bosses separated by an axial segment.

8. The seal (30) according to one of the preceding claims, **characterized in that** said outer face (36a) of said outer wing (36) comprises first and second circumferential elastomer bosses (37a, 37b) axially spaced apart, said second boss (37b), which is axially closest to the free end (38) of the outer wing (36), extends by the end sealing lip (38).

9. The seal (30) according to one of the preceding claims, **characterized in that** the when idle, the seal has a substantially U-shaped axial section, said core (33) extending radially and being reinforced by said reinforcement (35), which extends **in that** said outer wing (36) while forming a "L" in axial section, said reinforcement being made from metal or rigid plastic and angularly and continuously reinforcing the elastomeric body of the seal, this elastomeric seal body comprising said innermost circumferential portion and said outer face of the outer wing.

10. The seal (30) according to one of the preceding claims, **characterized in that** said innermost circumferential portion (31aa) extends axially toward said core (33) by an oblique ramp (31ab) extending radially inward to a connecting portion forming a hinge (34) that can connect said inner wing (31) to said core and be provided with a circumferential protection lip (31f) extending radially inward at the end of said ramp.

11. The seal (30) according to claim 10, **characterized in that** said hinge (34) has a thickness comprised between 0.5 mm and 1.0 mm for an inner diameter (D0) of the inner wing (31) in the state gripped against the endpiece (20) comprised between 35 mm and 100 mm.

12. A quick fluid-transfer coupling (1) usable to couple a rigid male tubular endpiece (20) to a flexible female hose, the coupling comprising:
- a female tubular sleeve (10), preferably molded by injecting a plastic material or a plastic matrix composite,
- the endpiece, which is mounted radially and axially inside the sleeve and which has a cylindrical outer surface (22), and
- an annular seal (30) with a reinforcement (35) that is housed in an inner recess (13) of the sleeve and is suitable for being gripped against said outer surface of the endpiece so as to produce globally static sealing between the sleeve and the endpiece,
**characterized in that** the seal is as defined in one of the preceding claims.

13. The coupling (1) according to claim 12, **characterized in that** the sleeve (10) and the endpiece (20) are not movable in permanent relative rotation during fluid transfer, only being able to be movable in relative translation and/or alternating rotation during operation during said transfer.

14. The coupling (1) according to claim 12 or 13, **characterized in that** said recess (13) is defined by:
- a first inner cylindrical face (14) of the sleeve (10) having a first diameter,
- a second inner cylindrical face (15) of the sleeve having a second diameter smaller than said first diameter,
- an annular shoulder (16) that radially connects said first face to said second face, and
- an annular stop (17) for the seal (30) that extends radially from said first face and against which the seal is axially juxtaposed,
the seal being mounted bearing against said first face of the sleeve while being wedged in said shoulder and said stop and while having a radial seal height (H) substantially equal to that of said shoulder.

15. The coupling (1) according to claim 14, **characterized in that** said stop (17) comprises a spacer including an axial fastening portion (18) mounted below said first face (14) and a radial stop portion (19) that extends said axial portion toward said shoulder (16) and that has a radial stop height substantially equal to said radial height (H) of the seal.
